# EUROPÄISCHE PATENTSCHRIFT

(11) **EP 0 681 943 B1**
(45) Veröffentlichungstag und Bekanntmachung des Hinweises auf die Patenterteilung: **16.09.1998**
(21) Anmeldenummer: 95105437.8
(22) Anmeldetag: 11.04.1995
(51) Int. Cl.: B60R 9/045

(54) **Befestigungsvorrichtung**
Fastening device
Dispositif de fixation

(30) Priorität: 09.05.1994 DE 4416339
(43) Veröffentlichungstag der Anmeldung: 15.11.1995
(73) Patentinhaber: Happich Fahrzeug-Dachsysteme GmbH, D-42285 Wuppertal (DE)
(72) Erfinder: Brunner, Harald, D-42659 Solingen (DE)

(56) Entgegenhaltungen:
- DE-A- 2 804 588
- DE-A- 3 510 805
- DE-U- 9 407 580

## Beschreibung

Die Erfindung bezieht sich auf eine Befestigungsvorrichtung, die einerseits an einem Querträger und andererseits an einem Galeriestab eines mit einer Dachreling ausgestatteten Kraftwagens anordbar ist.

Eine bekannte Befestigungsvorrichtung gemäß der DE 41 08 058 C1 weist zur Fahrzeugmitte hin liegende Abstützbacken und zur Fahrzeugaußenseite hin liegende Spannbacken auf, die am Querträger angeordnet sind und darin über einen Spannschraubenbolzen verschiebbar sind. Durch Anziehen der Spannschraubenbolzen werden die verschiebbaren Spannbacken unter Einschluß der Galeriestäbe gegen die Abstützbacken gezogen und damit der Querträger mit den Galeriestäben verbunden. Es hat sich gezeigt, daß die bekannte Befestigungsvorrichtung den technischen Anforderungen im Hinblick auf eine optimale Kraftübertragung nicht immer genügt und daß sie einen beträchtlichen Bedienungsaufwand verlangt.

Der Erfindung liegt die Aufgabe zugrunde, eine Befestigungsvorrichtung der eingangs genannten Art zu schaffen, die eine Verbindung des Querträgers an beliebig gestalteten Profilquerschnitten der Galeriestäbe ermöglicht, eine zuverlässige Festlegung an den Galeriestäben gewährleistet und die sich durch eine schnelle und einfache Handhabung auszeichnen soll.

Ausgehend von dieser Aufgabenstellung sind bei einer Befestigungsvorrichtung der eingangs genannten Art die im Anspruch 1 angegebenen Erfindungsmerkmale zur Aufgabenlösung vorgesehen.

Die erfindungsgemäße Befestigungsvorrichtung besitzt bei einem relativ einfachen und komplexen Aufbau ein Hebelsystem, das sich bei leichter Schließkraft durch eine enorme Spannkraft auszeichnet, an beliebig geformte Galeriestabquerschnitte anzusetzen und überaus schnell und einfach zu handhaben ist.

Um mit geringem Kraftaufwand große Klemmkräfte zu erzielen und diese solange wie benötigt aufrechtzuerhalten, sind die im Anspruch 2 genannten Merkmale vorgesehen.

Die Maßnahmen nach Anspruch 3 dienen zur Erhöhung des Bedienungskomforts und der Sicherung gegen unbefugtes Entnehmen. In diesem Sinne sind auch die Maßnahmen nach Anspruch 4 zu verstehen, wobei die darin gekennzeichnete erste Alternative den Querträger am Galeriestab sichern soll, während die zweite Alternative gleichzeitig die am Querträger gehalterten Befestigungselemente gegen ein Abziehen über das Stirnende des Querträgers hinaus sichert.

Auch die Maßnahme nach Anspruch 5 dient zur Erhöhung des Bedienungskomforts, indem die Griffschale ohne Beeinflussung der Hebelmechanik soweit vom Gehäuse abgezogen werden kann, bis sie zwecks Betätigung der Hebelmechanik richtig umgriffen werden kann.

Die besondere Ausbildung des Gehäuses der Befestigungsvorrichtung nach Anspruch 6 ermöglicht eine einfache Herstell- und Montierbarkeit desselben.

Die Ausgestaltung der Erfindung gemäß Anspruch 7 dient der besonders einfach zu bewerkstelligenden Einstellbarkeit des je nach Galeriestabprofils benötigten Spannmaßes.

Ein Ausführungsbeispiel der Erfindung wird im folgenden anhand der Zeichnung näher erläutert, und es zeigen:
- Fig. 1: eine auf einem Fahrzeugdach angeordnete Dachreling mit Querträgern,
- Fig. 2: einen Endbereich eines Querträgers mit einer daran angeordneten Befestigungsvorrichtung im völlig geöffneten Zustand, aufgesetzt auf einen Galeriestab,
- Fig. 3: die Befestigungsvorrichtung und ihre Anordnung nach Fig. 2, jedoch in einem halb geöffneten/geschlossenen Zustand,
- Fig. 4: die Befestigungsvorrichtung und ihre Anordnung nach Fig. 2 oder 3, jedoch im völlig geschlossenen, gespannten Zustand,
- Fig. 5: eine perspektivische Ansicht der Befestigungsvorrichtung mit nur teilweise dargestelltem Gehäuse,
- Fig. 6: eine perspektivische Ansicht des Gehäuses der Befestigungsvorrichtung,
- Fig. 7: eine perspektivische Ansicht der Hebelmechanik und
- Fig. 8: die Befestigungsvorrichtung und ihre Anordnung ähnlich der nach Fig. 4, jedoch in einer gegenüber Fig. 4 abgewandelten Ausführungsform.

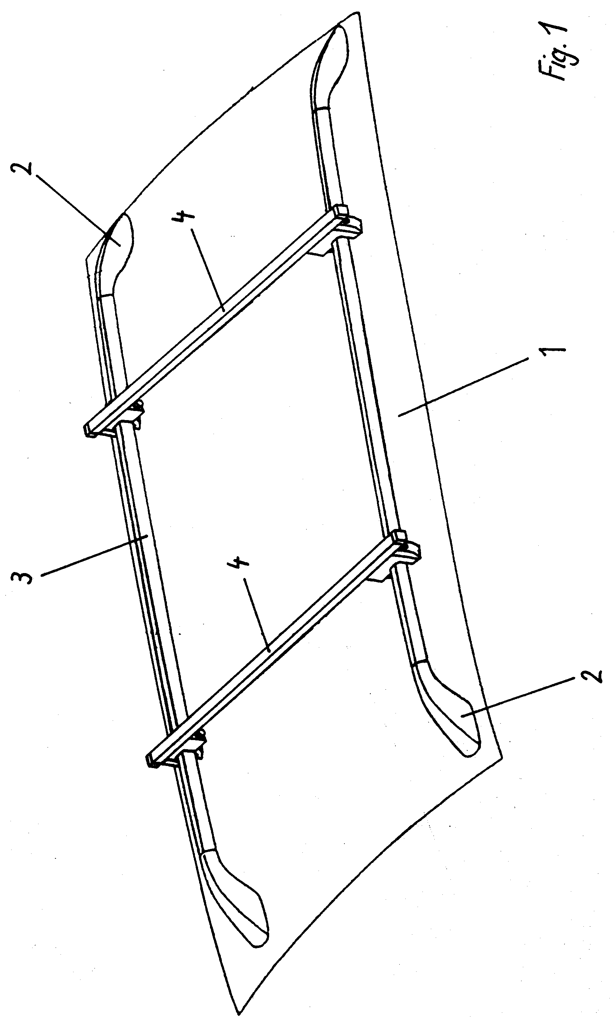

Fig. 1 läßt das Dachblech 1 eines nicht näher dargestellten Fahrzeugs mit einem darauf angeordneten Dachlastenträger erkennen. Der Dachlastenträger wird aus zwei Relings, bestehend aus Stützfüßen 2 und Galeriestäben 3 sowie aus Querträgern 4, die an den Galeriestäben 3 befestigt sind, gebildet. Die Relings erstrecken sich zumindest annähernd parallel zueinander und verlaufen in Fahrzeuglängsrichtung.

Die Befestigungsanordnung der Querträger 4 an den Galeriestäben 3 und die Ausbildung der Befestigungsvorrichtung hierfür wird nun im folgenden beschrieben.

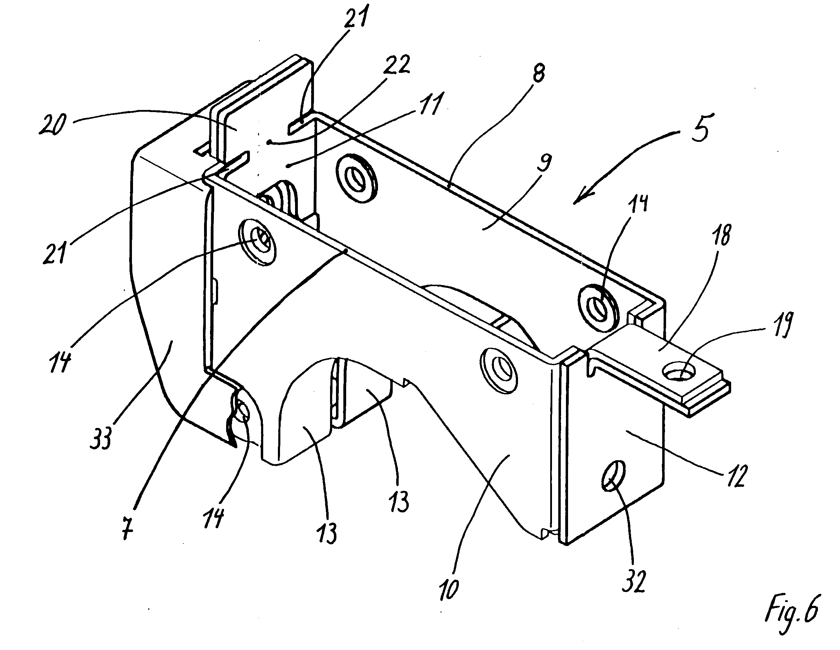

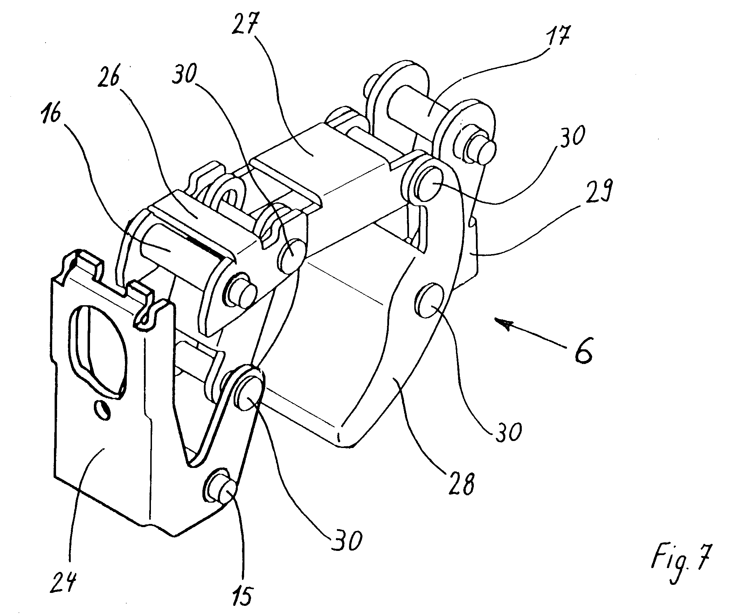

Die an jedem Endbereich eines jeden Querträgers 4 angeordnete Befestigungsvorrichtung besteht aus einem, insbesondere aus Fig. 6 ersichtlichen Gehäuse 5 sowie aus einer vom Gehäuse 5 aufgenommenen Hebelmechanik 6, die in Fig. 7 besonders deutlich dargestellt ist.

Das Gehäuse 5, das aus den Gehäuseteilen 7, 8 zusammengesetzt ist, weist Seitenwände 9, 10, eine vordere Stirnwand 11 und eine hintere Stirnwand 12 auf. Das nach oben und bereichsweise nach vorne und unten offene Gehäuse 5 ist mit an den Seitenwänden nach innen gezogenen Materialbereichen versehen, die miteinander einen von oben her auf den Galeriestab 3 abstützbaren Spannbacken 13 bilden. In den Seitenwänden 9, 10 des Gehäuses 5 sind jeweils einandergegenüberliegend Bohrungen 14 vorgesehen, die zur Aufnahme von Lagerbolzen 15, 16, 17 der Hebelmechanik 6 dienen.

Das Gehäuse 5 weist weiterhin einen rechtwinklig von der Gehäusestirnwand 12 abstrebenden Fortsatz 18 mit einer Bohrung 19 und in Verlängerung der Stirnwand 11 einen hammerkopfartigen Fortsatz 20 mit einem durch seitliche Schlitze 21 gebildeten Hals 22 auf. Das Gehäuse 5 ist an der Unterseite des Querträgers 4, der über einen axialen Endbereich einen Längsschlitz in seiner Bodenwand aufweist, befestigt. Der Fortsatz 18 ist an der Bodenwand des Querträgers 4 abgestützt und die an den Längsschlitz im Querträger 4 angrenzenden Bodenwandbereiche greifen in die Schlitze 21 am Fortsatz 20 ein. Eine axiale Festlegung des Gehäuses 5 am Querträger 4 erfolgt durch ein Befestigungselement, z. B. eine Schraube 23, die in eine Nietmutter 37 eingedreht sein kann. Innerhalb des Querträgers 4 sitzt noch ein Klemmwinkel 36.

Die Hebelmechanik 6 umfaßt einen als Spannhebel dienenden Winkelhebel 24, einen Zwischenhebel 25, einen Positionshebel 26 eine Lasche 27, einen schwenkbaren Spannbacken 28 und einen Einstellhebel 29. Der Winkelhebel 24 ist um den gehäusefesten Lagerbolzen 15 schwenkbar. Am kurzen Hebelarm des Winkelshebels 24 ist der Zwischenhebel 25 einendig über einen ersten Lagerbolzen 30 angelenkt. Anderendig ist der Zwischenhebel 25 einerseits am Positionshebel 26, der um den gehäusefesten Lagerbolzen 16 schwenkbar ist, und andererseits an der Lasche 27 einendig angelenkt, und zwar über einen zweiten Lagerbolzen 30. Die Lasche 27 ist mit ihrem anderen Endbereich über einen dritten Lagerbolzen 30 am oberen Ende des etwa sichelförmig gestalteten Spannbackens 28 angelenkt, der seinerseits etwa mittig um einen vierten Lagerbolzen 30 schwenkbar ist. Am vierten Lagerbolzen 30 ist zudem der Einstellhebel 29 einendig angelenkt, der anderendig um den Lagerbolzen 17 schwenkbar ist.

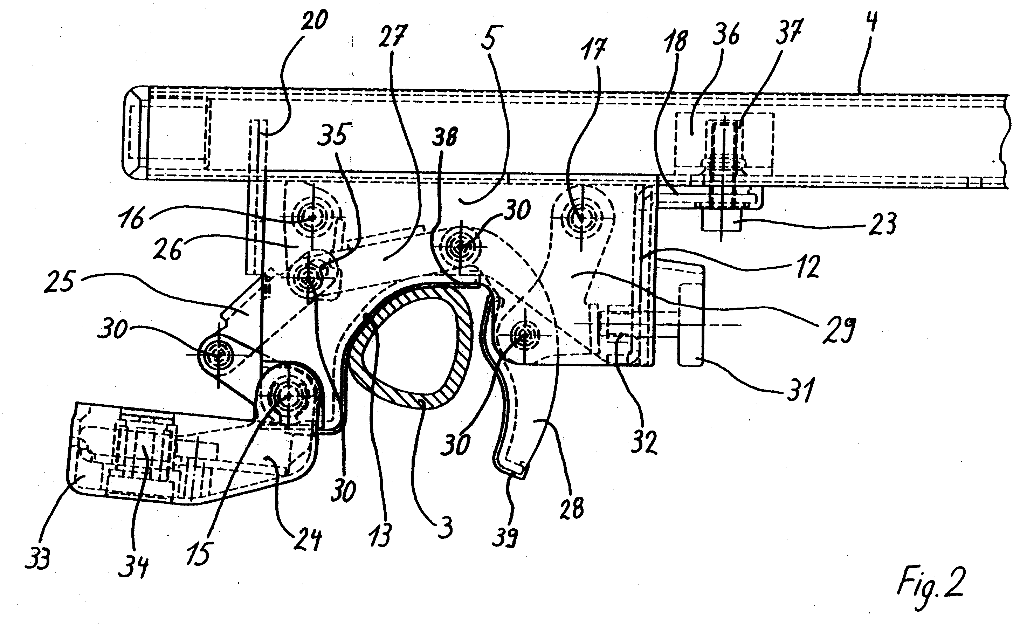

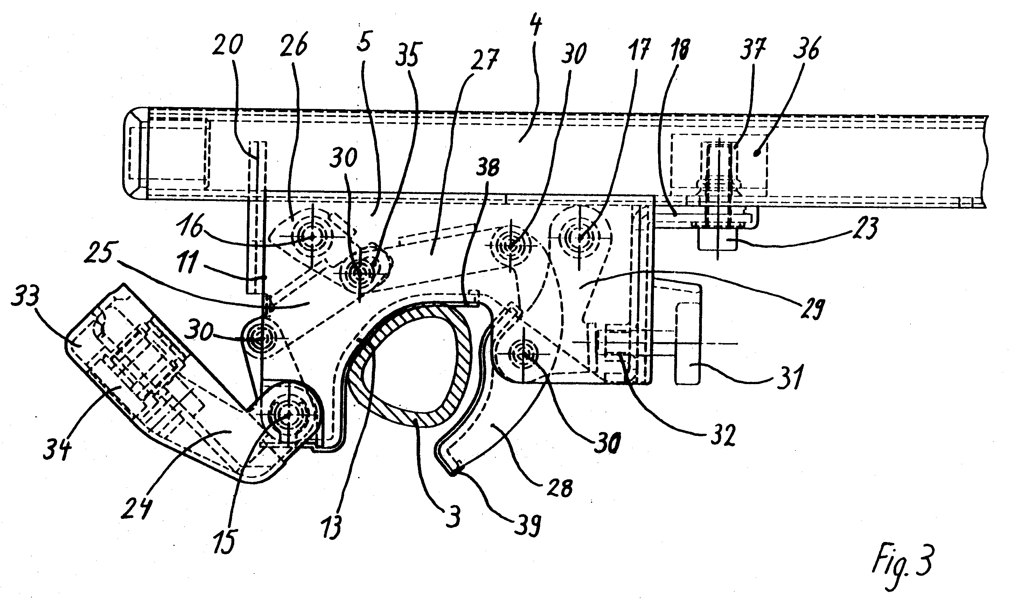

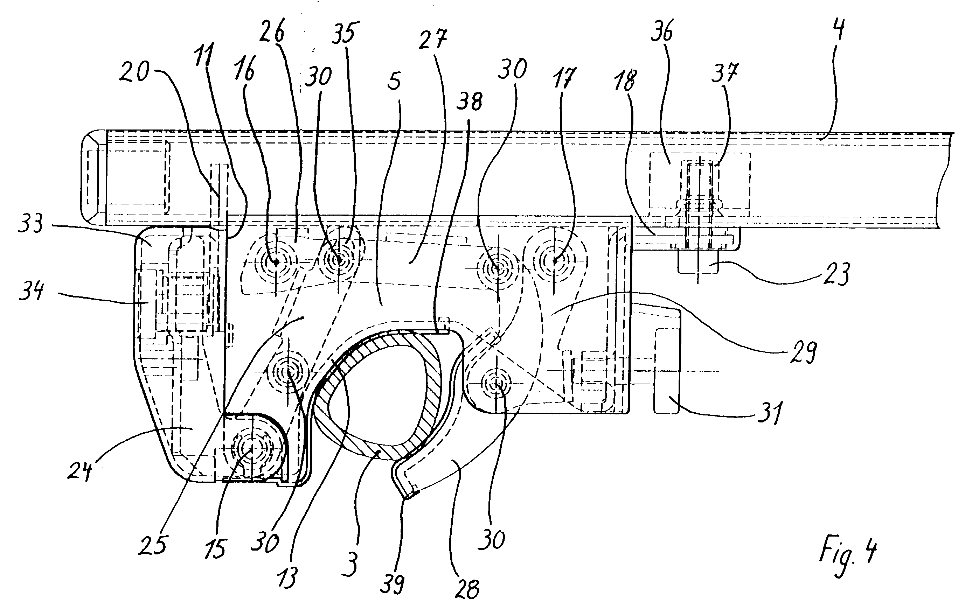

Zum Befestigen eines Querträgers 4 an den Galeriestäben 3, wird dieser mit seinen an den beiden Enden sitzenden Befestigungsvorrichtungen auf die Galeriestäbe 3 aufgesetzt. Die Spannbacken 13 und 28 sind, wie z.B. in Fig. 2 gezeigt, weit geöffnet, wobei sich der Winkelhebel 24 in einer nach unten geschwenkten Position befindet. Durch ein Hochschwenken des Spannhebels aus der Position nach Fig. 2, über die Position nach Fig. 3 bis in die Position nach Fig. 4 erfolgt ein Einspannen des Galeriestabs 3 zwischen den Spannbacken 13 und 28, und zwar in äußerst schneller und zuverlässiger Weise. Durch das Hochschwenken des Spannhebels wird der erste Gelenkbolzen 30 auf einer Kreisbogenbann um den Lagerbolzen 15 geschwenkt, damit der zweite Gelenkbolzen 30 auf einer Kreisbogenbahn um den Lagerbolzen 16 geschwenkt, wodurch wiederum der Spannbacken 28 über die Lasche 27 um den vierten Gelenkbolzen 30 geschwenkt und gegen den Galeriestab 30 gespannt wird. Der kurze Hebelarm des Spannhebels bildet mit dem Zwischenhebel 25, ebenso wie der Positionshebel 26 mit der Lasche 27 jeweils einen Kniehebel, dessen Hebelarme beim Einspannen des Galeriestabs 3 aus einer stark angewinkelten Position (Fig. 2 und 3) in eine Übertotpunktlage (Fig. 4) gestreckt werden. Ein ungewolltes Lösen der Befestigungsvorrichtung ist daher nicht möglich.

Um Galeriestäbe unterschiedlicher Größe spannen zu können, ist für den Einstellhebel 28 eine Stelleinrichtung vorgesehen, die aus einer Stellschraube 31 besteht. Die Stellschraube 31 sitzt mit ihrem Gewindeschaft in einem mit Innengewinde versehenen Lochdurchzug 32, der in der Stirnwand 12 des Gehäuses 5 ausgebildet ist. Das freie Ende der Stellschraube 31 wirkt auf den Einstellhebel 29, der um den Lagerbolzen 17 herum zu schwenken vermag. Somit läßt sich mühelos das jeweils erforderliche Spannmaß zwischen den Spannbacken 13 und 28 einstellen.

Der den Spannhebel bildende Winkelhebel 24 ist zweckmäßigerweise mit einer das Gehäuse 5 vorderseitig abdeckenden Griffschale 33 bestückt, die aus einem tiefgezogenen Blechkörper aber auch aus einem Kunststoff-Spritzgußteil bestehen kann. Zwischen dem Winkelhebel 24 und der Griffschale 33 besteht eine starre Verbindung. Die Griffschale 33 ist mit einem durch einen Schlüssel zu betätigenden Schließzylinder 34 mit Schließriegel ausgestattet.

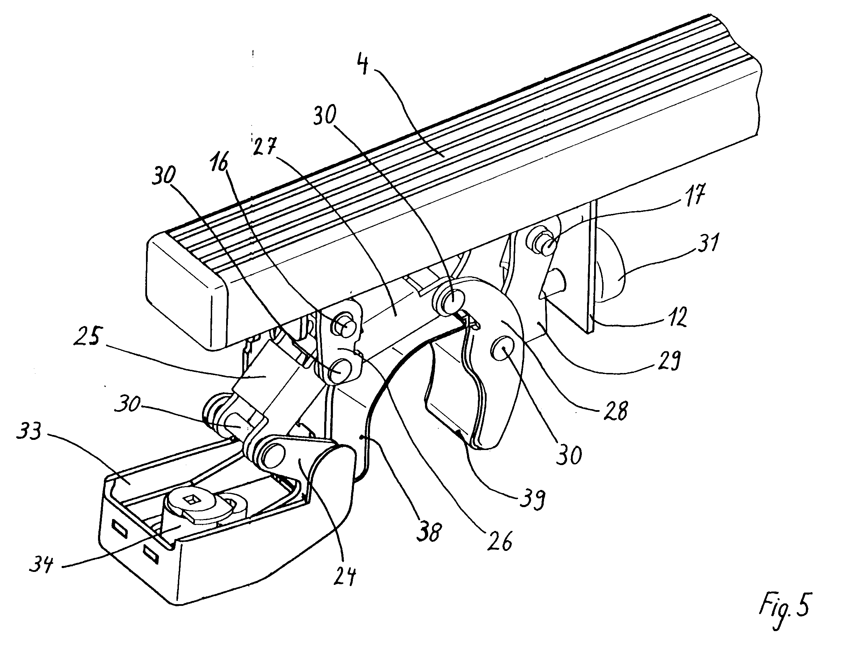

Die einzelnen Hebel der Hebelmechanik bestehen zweckmäßigerweise aus verformten Blechstanzteilen, wodurch eine einfache und kostengünstige Herstellbarkeit der Befestigungsvorrichtung ermöglicht wird. Jeder Einzelhebel besteht dabei vorzugsweise aus zwei über einen Steg miteinander verbundenen Schenkeln, was durch Fig. 5 und 7 besonders anschaulich verdeutlicht wird.

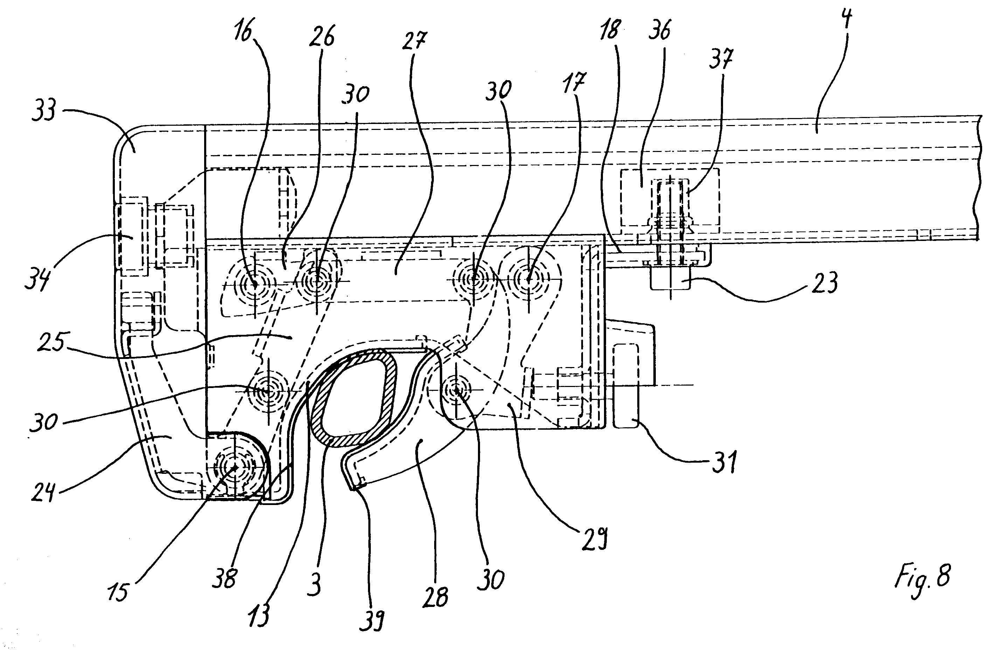

Das in Fig. 8 gezeigte Ausführungsbeispiel der Befestigungsvorrichtung unterscheidet sich im Grundaufbau nicht von dem zuvor beschriebenen. Der Unterschied besteht allein in der Ausbildung der Griffschale 33, die hier so gestaltet ist, daß sie ein Stirnende des Querträgers 4 mit abzudecken vermag. Fig. 8 zeigt auch, z.B. im Vergleich mit Fig. 4, daß die neue Schnellspann-Befestigungsvorrichtung durchaus zum Einsatz an im Querschnitt unterschiedlich dimensionierte Galeriestäbe 3 geeignet ist. Hierzu ist lediglich ein mehr oder weniger weites Eindrehen der Stellschraube 31 in den Lochdurchzug 32 erforderlich. Ein Drehen der Stellschraube 31 vom Einstellhebel 29 weg bewirkt eine Vergrößerung des Spannmaßes, während ein Drehen der Stellschraube 31 zum Einstellhebel 29 hin eine entsprechende Verkleinerung des Spannmaßes ergibt.

Der Vollständigkeit halber sei erwähnt, daß die Spannbacken 13 und 28 jeweils mit einer Scheuerschutzvorrichtung 38, 39 bestückt sein sollten, um ein Verkratzen der Galeriestaboberfläche zu vermeiden.

### Bezugszeichenliste

- 1: Dachblech
- 2: Stützfüße
- 3: Galeriestäben
- 4: Querträger
- 5: Gehäuse
- 6: Hebelmechanik
- 7: Gehäuseteil
- 8: Gehäuseteil
- 9: Seitenwand
- 10: Seitenwand
- 11: Stirnwand vorne
- 12: Stirnwand hinten
- 13: Spannbacken
- 14: Bohrungen
- 15: Lagerbolzen
- 16: Lagerbolzen
- 17: Lagerbolzen
- 18: Fortsatz
- 19: Bohrung
- 20: Fortsatz
- 21: Schlitze
- 22: Hals
- 23: Schraube
- 24: Winkelhebel
- 25: Zwischenhebel
- 26: Positionshebel
- 27: Lasche
- 28: Spannbacken
- 29: Einstellhebel
- 30: Lagerbolzen
- 31: Stellschraube
- 32: Lochdurchzug
- 33: Griffschale
- 34: Schließzylinder
- 35: Langloch
- 36: Klemmwinkel
- 37: Nietmutter
- 38: Scheuerschutzvorrichtung
- 39: Scheuerschutzvorrichtung

## Patentansprüche

1. Befestigungsvorrichtung, die einerseits an einem Querträger (4) und andererseits an einem Galeriestab (3) eines mit einer Dachreling ausgestatteten Kraftwagens anordbar ist mit
- einem am Querträger (4) befestigbaren Gehäuse (5), an dem ein fester von oben her auf den Galeriestab (3) abstützbarer Spannbacken (13) ausgebildet ist,
- zwei senkrecht orientierten und mit Abstand zueinander ausgerichteten Gehäusewänden (9, 10), zwischen denen eine Hebelmechanik (6) auf Gelenkbolzen (30) und gehäusefesten Lagerbolzen (15, 16, 17) angeordnet ist, und
- einer Hebelmechanik (6) mit einem als Spannhebel dienenden, um einen gehäusefesten Lagerbolzen (15) schwenkbaren Winkelhebel (24), einem am kurzen Hebelarm desselben über einen Gelenkbolzen (30) angelenkten Zwischenhebel (25), der anderendig über einen Gelenkbolzen (30) einerseits an einem Positionshebel (26), der um einen gehäusefesten Lagerbolzen (16) schwenkbar ist, und andererseits an einer Lasche (27) angelenkt ist, die ihrerseits anderendig über einen Gelenkbolzen (30) einendig an einem etwa mittig um einen Gelenkbolzen (30) relativ zum oberen festen Spannbacken (13) schwenkbaren unteren Spannbacken (28) angelenkt ist, der über seinen etwa mittigen Lagerbolzen (30) mit einem Einstellhebel (29) verbunden ist, der um einen gehäusefesten Lagerbolzen (17) über ein Verstellelement schwenkbar ist.

2. Befestigungsvorrichtung nach Anspruch 1, dadurch gekennzeichnet, daß der kurze Hebelarm des Spannhebels (24) mit dem Zwischennebel (25) und auch der Positionshebel (26) mit der Lasche (27) jeweils nach Art eines Kniehebels durch den jeweiligen Gelenkbolzen (30) miteinander verbunden sind, derart, daß sie beim Verschwenken des Spannhebels (24) in oder entgegen der Spannrichtung über die gestreckte Totpunktlage hinweg bewegbar sind.

3. Befestigungsvorrichtung nach Anspruch 1 oder 2, dadurch gekennzeichnet, daß der Spannhebel (24) als Griffschale (33) ausgebildet oder mit einer solchen bestückt ist, wobei die Griffschale (33) einen mittels Schlüssel zu betätigenden Schließzylinder (34) mit Schließriegel als Diebstahlsicherung trägt.

4. Befestigungsvorrichtung nach Anspruch 3, dadurch gekennzeichnet, daß die Griffschale (33) eine den Querträger (4) untergreifende Länge aufweist oder eine Länge, die einen stirnendigen Abschluß des Querträgers (4) ermöglicht.

5. Befestigungsvorrichtung nach wenigstens einem der Ansprüche 1 bis 4, dadurch gekennzeichnet, daß die Lagerbohrung für den Gelenkbolzen (30) am positionshebelseitigen Ende des Zwischenhebels (25) als mit der Längsachse des Zwischenhebels (25) zusammenfallendes Langloch (35) ausgebildet ist.

6. Befestigungsvorrichtung nach wenigstens einem der Ansprüche 1 bis 5, dadurch gekennzeichnet, daß das Gehäuse (5) an der Unterseite des Querträgers (4), der über einen axialen Endbereich einen Langsschlitz in seiner Bodenwand aufweist, befestigt ist und hierfür einendig einen gegenüber einer Gehäusestirnwand (12) rechtwinklig abstrebenden, sich an oder auf der Bodenwand des Querträgers (4) abstützenden Fortsatz (18) zum Festlegen am Querträger (4) mittels eines Befestigungselements, wie eine Schraube (23), und anderendig einen hammerkopfartigen Fortsatz (20) an der anderen Gehäusestirnwand (11) aufweist, dessen durch seitliche Schlitze (21) gebildeter Hals (22) in den Längsschlitz des Querträgers (4) einschiebbar ist.

7. Befestigungsvorrichtung nach wenigstens einem der Ansprüche 1 bis 6, dadurch gekennzeichnet, daß der Einstellhebel (29) mittels einer in der ihm benachbarten Gehäusestirnwand (12) geführten Stellschraube (31) stufenlos auf das jeweilige Spannmaß einstellbar ist.

## Claims

1. Fastening device which can be arranged, on the one hand, on a transverse bearer (4) and, on the other hand, on a gallery bar (3) of a motor vehicle fitted with a roof rail, having
- a housing (5) which can be fastened on the transverse bearer (4) and on which is formed a fixed clamping jaw (13), which can be supported from above on the gallery bar (3),
- two housing walls (9, 10) which are oriented perpendicularly and are aligned at a distance from one another, between which housing walls a lever mechanism (6) is arranged on hinge bolts (30) and bearing bolts (15, 16, 17) fixed on the housing, and
- a lever mechanism (6) with an angle lever (24) which serves as a clamping lever and can be pivoted about a bearing bolt (15) fixed on the housing, an intermediate lever (25) which is coupled to the short lever arm of the angle lever via a hinge bolt (30), can be pivoted at the other end on the one hand, via a hinge bolt (30) on a positioning lever (26) which can be pivoted about a bearing bolt (16) fixed on the housing, and, on the other hand, is coupled to a link (27) which, for its part, is coupled at the other end, via a hinge bolt (30), by one end on a lower clamping jaw (28), which can be pivoted approximately centrally about a hinge bolt (30) relative to the upper, fixed clamping jaw (13) and is connected, via its approximately central bearing bolt (30), to an adjusting lever (29), which can be pivoted about a bearing bolt (17) fixed on the housing, via an adjusting element.

2. Fastening device according to Claim 1, characterized in that the short lever arm of the clamping lever (24) is connected to the intermediate lever (25), and the positioning lever (26) is connected to the link (27), in each case in the manner of a toggle lever by the respective hinge bolt (30), in such a manner that as the clamping lever (24) pivots, they can move beyond the extended dead centre position in or counter to the clamping direction.

3. Fastening device according to Claim 1 or 2, characterized in that the clamping lever (24) is designed as a gripping shell (33), or is fitted with one, the gripping shell (33) bearing a locking cylinder (34) which can be operated by means of a key and has a locking bolt as a means of securing against theft.

4. Fastening device according to Claim 3, characterized in that the gripping shell (33) has a length which engages under the transverse bearer (4), or a length enabling the transverse bearer (4) to be terminated at the end.

5. Fastening device according to at least one of Claims 1 to 4, characterized in that the bearing hole for the hinge bolt (30) on that end of the intermediate lever (25) which is on the positioning-lever side is designed as an elongated hole (30) which coincides with the longitudinal axis of the intermediate lever (25).

6. Fastening device according to at least one of Claims 1 to 5, characterized in that the housing (5) is fastened on the lower side of the transverse bearer (4), which has a longitudinal slot in its bottom wall over an axial end region, and has, for this purpose, at one end an extension (18), which protrudes at right angles with respect to a housing end wall (12) and is supported at or on the bottom wall of the transverse bearer (4), for the securing to the transverse bearer (4) by means of a fastening element, such as a screw (23), and at the other end has a hammer-head-like extension (20) on the other housing end wall (11), the neck (22) of which extension, which is formed by lateral slots (21), can be inserted into the longitudinal slot of the transverse bearer (4).

7. Fastening device according to at least one of Claims 1 to 6, characterized in that the adjusting lever (29) can be infinitely adjusted to the particular clamping size by means of an adjusting screw (31) guided in the housing end wall (12) adjacent to said lever.

## Revendications

1. Dispositif de fixation qui peut être monté, d'une part, sur une traverse (4) et, d'autre part, sur une barre de galerie (3) d'un véhicule automobile équipé d'une rambarde de toit, avec
- un boîtier (5) pouvant être fixé sur la traverse (4), sur lequel est réalisée une mâchoire de serrage (13) rigide pouvant prendre appui par le haut sur la barre de galerie (3),
- deux parois de boîtier (9, 10), orientées verticalement et à distance l'une de l'autre, entre lesquelles est disposé un mécanisme à levier (6) monté sur des boulons d'articulation (30) et des boutons de tourillonnement (15, 16, 17) fixes par rapport au boîtier, et
- un mécanisme à leviers (6) avec un levier coudé (24) servant de levier de serrage, pouvant pivoter autour d'un bouton de tourillonnement (15) fixe par rapport au boîtier, un levier intermédiaire (25) articulé sur le bras de levier court du levier coudé, par l'intermédiaire d'un boulon d'articulation (30), et qui est articulé à l'autre extrémité, par l'intermédiaire d'un bouton d'articulation (30), d'une part, sur un levier de positionnement (26) pouvant pivoter autour d'un boulon de tourillonnement (16) fixe par rapport au boîtier, et est, d'autre part, articulé sur une biellette (27) qui, à son tour, va être articulée par l'autre extrémité, par l'intermédiaire d'un boulon d'articulation (30), à une extrémité sur une mâchoire de serrage inférieure (28) pouvant pivoter, à peu près au centre, autour d'un boulon d'articulation (30), par rapport à la mâchoire de serrage fixe supérieure (13), mâchoire de serrage (28) qui est reliée, par l'intermédiaire de son boulon de tourillonnement (30) placé à peu près au centre, à un levier de réglage (29) qui peut pivoter d'un angle donné par l'intermédiaire d'un élément de réglage, autour d'un boulon de tourillonnement (17) fixe par rapport au boîtier.

2. Dispositif de fixation selon la revendication 1, caractérisé en ce que le bras de levier court du levier de serrage (24) avec le levier intermédiaire (25) et également le levier de positionnement (26) avec la biellette (27) sont à chaque fois reliés les uns aux autres à la façon d'un levier à genouillère au moyen du boulon d'articulation (30) respectif, de manière que, lors du pivotement du levier de serrage (24) dans ou à l'encontre du sens de serrage, ils puissent être déplacés en franchissant la position de point mort étendue.

3. Dispositif de fixation selon la revendication 1 ou 2, caractérisé en ce que le levier de serrage (24) est réalisé à la façon d'un manchon de saisie (33) ou bien est équipée d'un tel manchon de saisie, le manchon de saisie (33) portant un cylindre de fermeture (34) à actionner au moyen d'une clé, équipé d'un verrou de fermeture servant de sécurité antivol.

4. Dispositif de fixation selon la revendication 3, caractérisé en ce que le manchon de saisie (33) présente une longueur qui permet de saisir en dessous la traverse (4), ou bien une longueur qui permet d'obtenir une délimitation frontale de la traverse (4).

5. Dispositif de fixation selon au moins l'une des revendications 1 à 8, caractérisé en ce que le trou d'appui destiné au bouton d'articulation (30), à l'extrémité située du côté levier de positionnement du levier intermédiaire (25), est réalisé sous la forme d'un trou oblong (35) coïncidant avec l'axe longitudinal du levier intermédiaire (25).

6. Dispositif de fixation selon au moins l'une des revendications 1 à 5, caractérisé en ce que le boîtier (5) est fixé sur la face inférieure de la traverse (4) qui présente, sur une zone d'extrémité axiale, une fente longitudinale dans sa paroi de fond, et présente à cette fin, à une extrémité, un prolongement (18) constituant un étaiement à angle droit par rapport à la paroi frontale de boîtier (12), prenant appui à ou sur la paroi de fond de la traverse (4), dans le but d'une fixation sur la traverse (4) au moyen d'un élément de fixation, tel qu'une vis (23), et présente à l'autre extrémité un prolongement (20) en forme de tête de marteau, sur l'autre paroi frontale de boîtier (11), prolongement dont le cou (22) constitué par des fentes latérales (21) est insérable dans la fente longitudinale de la traverse (4).

7. Dispositif de fixation selon au moins une des revendications 1 à 6, caractérisé en ce que le levier de réglage (29) est réglable de façon continue à la valeur de serrage correspondante au moyen d'une vis de réglage (31) guidée dans la paroi frontale de boîtier (12) qui lui est voisine.
